# EUROPÄISCHE PATENTANMELDUNG

(11) **EP 4 527 751 A1**
(43) Veröffentlichungstag der Anmeldung: **26.03.2025**
(21) Anmeldenummer: 24201866.1
(22) Anmeldetag: 23.09.2024
(51) Int. Cl.: B65C 9/18, B65H 19/12, B65C 9/00

(54) **VORRICHTUNG ZUM ETIKETTIEREN VON BEHÄLTERN**

(30) Priorität: 25.09.2023 DE 102023125933
(71) Anmelder: KRONES AG, 93073 Neutraubling (DE)
(72) Erfinder: HAFNER, Dieter, 93073 Neutraubling (DE); PEUTL, August, 93073 Neutraubling (DE); WAGNER, Martin, 93073 Neutraubling (DE)
(74) Vertreter: v. Bezold & Partner Patentanwälte - PartG mbB

(57) **Zusammenfassung**

Die Erfindung betrifft eine Vorrichtung (10) zum Etikettieren von Behältern. Die Vorrichtung (10) weist eine Etikettiereinrichtung (12) mit einem Etikettieraggregat (14) zum Etikettieren der Behälter und eine Versorgungseinrichtung (24), die mit dem Etikettieraggregat (14) zum Zuführen eines Etikettenbands zu dem Etikettieraggregat (14) verbunden ist, auf. Die Versorgungseinrichtung (24) weist eine Roboterzelle (26) auf, die beabstandet zu dem Etikettieraggregat (14) angeordnet ist. Die Roboterzelle (26) weist eine Rollenablage (34), eine Rollenaufnahmevorrichtung (36) und einen Roboter (52), der dazu konfiguriert ist, die Rollenaufnahmevorrichtung (36) automatisch mit Etikettenrollen von der Rollenablage (34) zu beladen, auf.

## Beschreibung

### Technisches Gebiet

Die Erfindung betrifft eine Vorrichtung zum Etikettieren von Behältern mit einer Versorgungseinrichtung zum Versorgen einer Etikettiereinrichtung mit einem Etikettenband zum Etikettieren von Behältern.

### Technischer Hintergrund

In einer Behälterbehandlungsanlage kann eine Etikettiereinrichtung zum Etikettieren von Behältern umfasst sein. Beispielsweise kann die Etikettiereinrichtung die Behälter mit Etiketten von einer Etikettenrolle (Rolle mit Etikettenmaterial) etikettieren.

Herkömmlich werden die Etikettenrollen von einem Bediener per Hand nachgelegt. Ggf. muss der Benutzer weitere Aufgaben erfüllen, wie bspw. das positionsgerechte Abschneiden des Etikettenbandes, das Aufbringen eines doppelseitigen Klebebands auf das Etikettenband oder das Einbringen des Etikettenbandes in eine automatische Verklebung.

Die DE 10 2021 125 133 A1 beschreibt einen mobilen Roboter, ein Versorgungssystem und ein Verfahren zum Etikettenrollenwechsel an einem Etikettieraggregat zur Etikettierung von Behältern. Der mobile Roboter umfasst demnach eine Fahrzeugeinheit zum Ortswechsel des Roboters und eine Manipulatoreinheit mit einem Mehrachsmanipulator und einem zugehörigen Endeffektor zum Manipulieren von Etikettenrollen. Dadurch, dass der Endeffektor zum tragenden außenumfänglichen Greifen der Etikettenrollen und entleerter Rollenkerne von Etikettenrollen ausgebildet ist, lassen sich ergonomisch problematische Arbeitsschritte beim Nachlegen von Etikettenrollen ausschließlich maschinell und mit großer Präzision sowie in materialschonender Weise bewerkstelligen.

Die EP 3 760 550 A1 beschreibt eine Transfereinheit zum Zuführen von Rollen von Etikettiermaterial zu einem Etikettiermodul, das konfiguriert ist, um Etiketten auf Gegenstände aufzubringen. Die Transfereinheit weist ein Trägerelement auf, das so konfiguriert ist, dass es eine Mehrzahl von Rollen trägt, die vertikal in mindestens einem Stapel angeordnet sind. Die Transfereinheit weist ferner einen Roboterarm auf, der so konfiguriert ist, dass er jeweils mindestens eine Rolle an einer Greifstation aus dem Stapel entnimmt und sie an einer Freigabestation freigibt.

Der Erfindung liegt die Aufgabe zu Grunde, eine verbesserte Versorgung einer Etikettiereinrichtung mit Etikettenrollen zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung zum Etikettieren von Behältern (z. B. für eine Behälterbehandlungsanlage). Die Vorrichtung weist eine Etikettiereinrichtung, vorzugsweise Rundläufer-Etikettiereinrichtung, mit einem Etikettieraggregat zum Etikettieren der Behälter auf. Die Vorrichtung weist eine Versorgungseinrichtung auf, die mit dem Etikettieraggregat zum Zuführen eines Etikettenbands zu dem Etikettieraggregat verbunden ist. Die Versorgungseinrichtung weist eine Roboterzelle auf, die beabstandet zu dem Etikettieraggregat angeordnet ist. Die Roboterzelle weist eine Rollenablage zum Ablegen von Etikettenrollen auf. Die Roboterzelle weist ferner eine Rollenaufnahmevorrichtung zum Aufnehmen und Abrollen mindestens einer Etikettenrolle zu dem Etikettenband zum Zuführen zu dem Etikettieraggregat auf. Die Roboterzelle weist ferner einen Roboter (z. B. mit oder ohne Kollaborationsfunktionalität), vorzugsweise Mehrachsroboter, besonders bevorzugt Knickarmroboter, auf. Der Roboter ist dazu konfiguriert, die Rollenaufnahmevorrichtung automatisch mit Etikettenrollen von der Rollenablage zu beladen.

Vorteilhaft kann die Vorrichtung einerseits einen sehr hohen Automatisierungsgrad ermöglichen. Der Roboter kann vorteilhaft möglichst viele Tätigkeiten ausführen, anstelle von spezialisierten automatisierten einzelnen Vorrichtungen, wodurch sich insbesondere Kosten- und Flexibilitätsvorteile ergeben können. Andererseits ermöglicht die Vorrichtung vorteilhaft, dass eine Zugänglichkeit zu dem Etikettieraggregat aufgrund der beabstandeten Anordnung nicht durch den Roboter usw. beeinträchtigt wird. Dadurch können bspw. ohne großen Aufwand und mit sehr guter Zugänglichkeit Wartungs- oder Justierarbeiten an dem Etikettieraggregat durchgeführt werden. Vorteilhaft ist es auch nicht wie im Stand der Technik nach DE 10 2021 125 133 A1 nötig, den Bereich direkt vor dem Etikettieraggregat penibel freizuhalten, um stets einen Stellplatz für den mobilen Roboter zur Verfügung stellen zu können. Vorteilhaft kann die Roboterzelle auch eine hohe Leistung der Versorgungseinrichtung ermöglichen, mit der bspw. ebenfalls mehr als eine Etikettiereinrichtung versorgt werden kann. In diesem Zusammenhang ermöglicht die Roboterzelle nämlich bspw. die Aufstellung mehrerer Rollenaufnahmevorrichtungen, da keine beengten Platzverhältnisse wie direkt bei dem Etikettieraggregat herrschen.

In einem Ausführungsbeispiel weist die Versorgungseinrichtung ferner einen Etikettenbandpuffer auf, der mit der Rollenaufnahmevorrichtung zum Empfangen des Etikettenbands von der Rollenaufnahmevorrichtung und mit dem Etikettieraggregat zum Zuführen des Etikettenbands zu dem Etikettieraggregat verbunden ist. Der Etikettenbandpuffer ist dazu ausgebildet, das empfangene Etikettenband einzupuffern und das eingepufferte Etikettenband zum Zuführen zu dem Etikettieraggregat auszupuffern. Vorzugsweise kann der Etikettenbandpuffer innerhalb oder außerhalb von einer optionalen Schutzeinhausung der Roboterzelle angeordnet sein. Vorteilhaft kann damit eine kontinuierliche Versorgung mit Etikettenband auch dann sichergestellt werden, wenn bspw. gerade zwei Etikettenbänder miteinander verbunden werden.

In einem weiteren Ausführungsbeispiel weist die Vorrichtung ferner eine Bandführungsbrücke auf, die die Versorgungseinrichtung und das Etikettieraggregat zum Führen des Etikettenbands zu dem Etikettieraggregat verbindet. Vorzugsweise kann die Bandführungsbrücke außerhalb von einer optionalen Schutzeinhausung der Roboterzelle angeordnet sein. Vorteilhaft kann mit der Bandführungsbrücke auf einfache Weise eine Versorgung des beabstandet angeordneten Etikettieraggregats ermöglicht werden, ohne dass Lauf- oder Fahrwege zwischen dem Etikettieraggregat und der Versorgungseinrichtung blockiert werden.

In einer Ausführungsform ist die Roboterzelle mindestens so weit von dem Etikettieraggregat beabstandet, dass das Etikettieraggregat von der Etikettiereinrichtung abkoppelbar und wegbewegbar (z. B. wegschiebbar) ist. Alternativ oder zusätzlich kann ein Minimalabstand zwischen der Roboterzelle und dem Etikettieraggregat ≥ 1 m, ≥ 1.5 m, ≥ 2 m, ≥ 3 m, ≥ 4 m oder ≥ 5 m sein. Alternativ oder zusätzlich kann zwischen der Roboterzelle und dem Etikettieraggregat ein Lauf- oder Fahrweg verlaufen.

In einer weiteren Ausführungsform weist die Etikettiereinrichtung ein weiteres Etikettieraggregat zum Etikettieren der Behälter auf. Die Versorgungseinrichtung ist mit dem weiteren Etikettieraggregat zum Zuführen eines weiteren Etikettenbands zu dem weiteren Etikettieraggregat verbunden. Die Roboterzelle ist beabstandet zu dem weiteren Etikettieraggregat angeordnet und weist ferner eine weitere Rollenaufnahmevorrichtung zum Aufnehmen und Abrollen mindestens einer weiteren Etikettenrolle zu dem weiteren Etikettenband zum Zuführen zu dem weiteren Etikettieraggregat auf. Der Roboter ist dazu konfiguriert, die weitere Rollenaufnahmevorrichtung automatisch mit Etikettenrollen von der Rollenablage zu beladen. Vorteilhaft kann somit ein einziger Roboter mehrere Etikettieraggregate mit Etikettenrollen versorgen. Die Roboterzelle ermöglicht es dabei, dass der Roboter nicht aufwendig und zeitintensiv zwischen zwei Etikettieraggregaten verfahren werden muss. Stattdessen kann der Roboter vorteilhaft von einer einzigen Position aus die Versorgung der Etikettieraggregate sicherstellen. Die Roboterzelle kann damit insgesamt eine hohe Leistung der Versorgungseinrichtung ermöglichen.

In einer Ausführungsvariante ist mindestens eines erfüllt von:
- die Versorgungseinrichtung weist einen weiteren Etikettenbandpuffer auf, der mit der weiteren Rollenaufnahmevorrichtung zum Empfangen des weiteren Etikettenbands von der weiteren Rollenaufnahmevorrichtung und mit dem weiteren Etikettieraggregat zum Zuführen des weiteren Etikettenbands zu dem weiteren Etikettieraggregat verbunden ist, wobei der weitere Etikettenbandpuffer dazu ausgebildet ist, das empfangene weitere Etikettenband einzupuffern und das eingepufferte weitere Etikettenband zum Zuführen zu dem weiteren Etikettieraggregat auszupuffern;
- die Vorrichtung weist ferner eine weitere Bandführungsbrücke auf, die die Versorgungseinrichtung und das weitere Etikettieraggregat zum Führen des weiteren Etikettenbands zu dem weiteren Etikettieraggregat verbindet;
- die Roboterzelle ist mindestens so weit von dem weiteren Etikettieraggregat beabstandet, dass das weitere Etikettieraggregat von der Etikettiereinrichtung abkoppelbar und wegbewegbar (z. B. wegschiebbar) ist;
- ein Minimalabstand zwischen der Roboterzelle und dem weiteren Etikettieraggregat ist ≥ 1 m, ≥ 1.5 m, ≥ 2 m, ≥ 3 m, ≥ 4 m oder ≥ 5 m; und
- zwischen der Roboterzelle und dem weiteren Etikettieraggregat verläuft ein Lauf- oder Fahrweg.

In einer weiteren Ausführungsvariante sind die Rollenaufnahmevorrichtung und die weitere Rollenaufnahmevorrichtung jeweils hin zu dem Roboter ausgerichtet, vorzugsweise jeweils radial bezüglich einer (z. B. stationären) Basis des Roboters, und/oder jeweils äquidistant zu dem Roboter angeordnet. Vorteilhaft kann der Roboter somit zum Bestücken der Rollenaufnahmevorrichtungen im Grunde dieselbe Bewegung durchführen, sodass im Wesentlichen eine einmalige Programmierung für diese Roboterbewegung ausreicht, um mehrere Rollenaufnahmevorrichtungen zu beladen und auch um eine Vielzahl von Konfigurationen der Roboterzelle abzudecken (z. B. ortsfester Roboter, Roboter auf Linearachse, variable Position der Rollenaufnahmen, unterschiedliche Anzahl von Rollenaufnahmen usw.). Falls der Roboter auf z. B. einer Linearachse beweglich angebracht ist, hat die Roboterbasis eine Vielzahl von Arbeitspositionen und ein Abstand und eine Ausrichtung der Rollenaufnahmevorrichtungen kann daher in einem gewissen Rahmen variabel sein.

In einem Ausführungsbeispiel weist die Rollenaufnahmevorrichtung und/oder die weitere Rollenaufnahmevorrichtung (jeweils) zwei, vorzugsweise horizontal oder vertikal ausgerichtete, Rollenaufnahmen, vorzugsweise Rollenteller, und einen Verbinder, der dazu ausgebildet ist, ein Bandende einer Etikettenrolle von einer der zwei Rollenaufnahmen mit einem Bandanfang einer Etikettenrolle von der anderen der zwei Rollenaufnahmen zu verbinden, auf. Vorzugsweise kann der Roboter ferner zum Zuführen des Bandanfangs zu dem Verbinder und/oder zum Applizieren eines Klebebands auf den Bandanfang konfiguriert sein. Vorteilhaft kann damit eine unterbrechungsfreie Versorgung mit Etikettenbändern sowie eine sichere und schnell herzustellende Verbindung der Etikettenbänder ermöglicht werden. Vorteilhaft kann eine horizontale Ausrichtung der Rollenaufnahmen eine Bestückung mittels des Roboters erleichtern.

In einem weiteren Ausführungsbeispiel weist die Roboterzelle ferner eine Schutzeinhausung auf, die die Rollenablage, die Rollenaufnahmevorrichtung und den Roboter einhaust. Alternativ oder zusätzlich weist die Roboterzelle ferner ein System zum Erzeugen mindestens eines Signalvorhangs, vorzugsweise Lichtvorhangs oder Laservorhangs, zum (z. B. einseitigen oder mehrseitigen) Begrenzen der Roboterzelle auf, wobei vorzugsweise das System zum Erzeugen eines Signalvorhangs vor der Rollenablage zum Zugänglichmachen der Rollenablage von außerhalb der Roboterzelle ausgebildet ist. Vorteilhaft kann die Schutzeinhausung und/oder der Signalvorhang eine sehr hohe Geschwindigkeit und Dynamik des Roboters ermöglichen, da keine Gefahr für Personen im Umfeld besteht. So kann die Roboterzelle mit sehr hoher Leistung betrieben werden, mit der bspw. auch mehr als eine Etikettiereinrichtung versorgt werden kann. Es ist allerdings bspw. auch möglich, dass auf eine Schutzeinhausung und Signalvorhänge gänzlich verzichtet wird und der Roboter als kollaborativer Industrieroboter (Cobot) betrieben wird. Vorteilhaft kann mittels eines Signalvorhangs eine Beladung der Rollenablage mit Etikettenrollen bspw. mittels eines Hubwagens oder eines fahrerlosen Transportfahrzeugs (AGV) vereinfacht werden.

In einer Ausführungsform weist die Roboterzelle ferner eine Werkzeugwechselstation auf, die vorzugsweise innerhalb einer optionalen Schutzeinhausung der Roboterzelle angeordnet ist. Der Roboter ist dazu konfiguriert, an der Werkzeugwechselstation einen automatischen Werkzeugwechsel durchzuführen. Optional kann der Roboter dazu konfiguriert sein, an der Werkzeugwechselstation einen automatischen Werkzeugwechsel zwischen unterschiedlichen Handhabungswerkzeugen, vorzugsweise aufweisend mindestens ein Rollen-Handhabungswerkzeug, bevorzugt Rollen-Innengreifer, zum Handhaben einer Etikettenrolle und/oder mindestens ein Bandanfang-Handhabungswerkzeug zum Handhaben eines Bandanfangs einer Etikettenrolle, durchzuführen. Vorteilhaft kann der Roboter somit unterschiedliche Greifertypen und unterschiedliche Greifer vom gleichen Typ (z. B. unterschiedliche Bandanfangsgreifer für niedrige und hohe Etikettenrollen) nutzen.

In einer weiteren Ausführungsform ist der Roboter ein stationärer Roboter, oder der Roboter ist innerhalb der Roboterzelle verfahrbar, vorzugsweise entlang einer Linearachse und/oder schienengeführt.

In einer Ausführungsvariante ist die Rollenaufnahmevorrichtung (auch) manuell mit einer Etikettenrolle beladbar. Vorzugsweise kann die Roboterzelle ferner einen (hindernisfreien) Personenbewegungsbereich aufweisen, der zwischen der Rollenablage und der Rollenaufnahmevorrichtung angeordnet ist, für einen Bediener zum manuellen Beladen der Rollenaufnahmevorrichtung mit einer Etikettenrolle (z. B. wenn der Roboter defekt ist, gewartet wird oder deaktiviert ist).

In einer Ausführungsform weist die Roboterzelle ferner eine (z. B. stationäre oder vom Roboter getragene) Prüfvorrichtung (z. B. aufweisend eine Kamera, einen kapazitiven Sensor und/oder einen Ultraschallsensor) auf, die bspw. innerhalb der Schutzeinhausung angeordnet und/oder dazu konfiguriert ist, Etikettenrollen zu prüfen, vorzugsweise in Bezug auf mindestens eines von:
- eine Wickelrichtung,
- eine Position und/oder einen Zustand eines Bandanfangs;
- eine Sorte,
- einen Durchmesser,
- eine Abweichung von einem vorgegebenen Rollenparameter (z. B. Überstand Etiketten über Kern, Maße, Gewicht usw.), und
- eine Beschädigung.

In einer weiteren Ausführungsform weist die Roboterzelle ferner einen Etikettenrollenpuffer zum Zwischenlagern von geprüften Etikettenrollen auf, der vorzugsweise innerhalb von einer optionalen Schutzeinhausung der Roboterzelle angeordnet ist. Vorteilhaft können damit geprüfte Etikettenrollen zwischengelagert werden.

In einem Ausführungsbeispiel ist der Roboter dazu konfiguriert, eine Etikettenrolle abhängig von einer zuvor mittels einer Prüfvorrichtung erfassten Wickelrichtung der jeweiligen Etikettenrolle zu wenden. Vorteilhaft kann der Roboter damit ermöglichen, dass die Etikettenrolle mit der richtigen Wickelrichtung zu der Rollenaufnahmevorrichtung zugeführt werden kann, ohne dass besondere Maßnahmen dafür getroffen werden müssen, dass die Etikettenrollen bereits mit der richtigen Ausrichtung auf der Rollenablage abgelegt werden.

In einem weiteren Ausführungsbeispiel weist der Roboter einen Klebebandspender zum Spenden eines, vorzugsweise doppelseitigen, Klebebands zum Verbinden von Etikettenbändern auf. Vorteilhaft kann damit ein einziger Klebebandspender für mehrere Verbinder der Rollenaufnahmevorrichtungen werden. Besonders vorteilhaft kann dies in Kombination mit mehreren Rollenaufnahmevorrichtungen, die definiert zu dem Roboter angeordnet sind, sein, da dann ein Programmieraufwand für den Roboter wesentlich verringert werden kann.

In einer Ausführungsform weist die Roboterzelle ferner eine Erfassungsvorrichtung (z. B. aufweisend das System zum Erzeugen mindestens eines Signalvorhangs) auf, die dazu konfiguriert ist, ein Eindringen eines Benutzers in die Roboterzelle zu erfassen und wenn das Eindringen erfasst wird:
- (z. B. nur) den Roboter zu stoppen oder einen Betrieb des Roboters von einem Autonomiebetriebsmodus zu einem Kooperationsbetriebsmodus zu wechseln; und/oder
- die Rollenaufnahmevorrichtung weiterlaufen zu lassen.

Vorteilhaft kann somit beim Betreten der Zelle bevorzugt nur der Roboter gestoppt oder in einen für den Benutzer sicheren Modus überführt werden. Die Rollenaufnahmevorrichtung(en) und ggf. die Verbinder können hingegen ohne Änderungen weiterbetrieben werden, da durch sie keine Gefahr für den Bediener ausgeht. Somit kommt es nicht sofort zu einer Produktionsunterbrechung beim Betreten der Roboterzelle. Alternativ kann der Roboter bspw. als Cobot betrieben werden, wodurch bspw. auch bei geöffneter Schutzeinhausung der Roboterzelle mit reduzierter Robotergeschwindigkeit weitergearbeitet werden kann.

Vorzugweise kann die Versorgungseinrichtung modular aufgebaut sein, und/oder die mindestens eine Rollenaufnahmevorrichtung und der Roboter weisen jeweils eine eigene Steuereinrichtung auf. Vorteilhaft kann die Modularität ermöglichen, unterschiedliche Versorgungseinrichtungen mit unterschiedlichen Automatisierungsgraden aufzubauen. Vorzugsweise kann es in der Roboterzelle keinen zentralen Schaltschrank geben. Stattdessen kann jede Komponente ihre eigene Steuereinrichtung aufweisen, was vorteilhaft die Modularität verbessert und nachträgliche Änderungen oder Nachrüstungen vereinfacht.

Ein weiterer Aspekt der vorliegenden Offenbarung betrifft eine Behälterbehandlungsanlage (z. B. zum Temperieren, Herstellen, Reinigen, Beschichten, Prüfen, Abfüllen, Verschließen, Pasteurisieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie). Die Behälterbehandlungsanlage kann die Vorrichtung zum Etikettieren wie hierin offenbart aufweisen.

Beispielsweise können die Behälter als Flaschen, Dosen, Kanister, Kartons, Flakons, Tuben usw. ausgeführt sein.

Vorzugsweise kann sich der Begriff "Steuereinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung zum Etikettieren von Behältern gemäß einem Ausführungsbeispiel der vorliegenden Offenbarung;
- Figur 2: eine Draufsicht auf eine Versorgungseinrichtung zum Versorgen einer Etikettiereinrichtung;
- Figur 3: eine perspektivische Ansicht eines Roboters der beispielhaften Versorgungseinrichtung;
- Figur 4: eine perspektivische Ansicht des beispielhaften Roboters mit einem anderen Handhabungswerkzeug als in Figur 3; und
- Figur 5: eine Draufsicht auf eine Versorgungseinrichtung zum Versorgen einer Etikettiereinrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

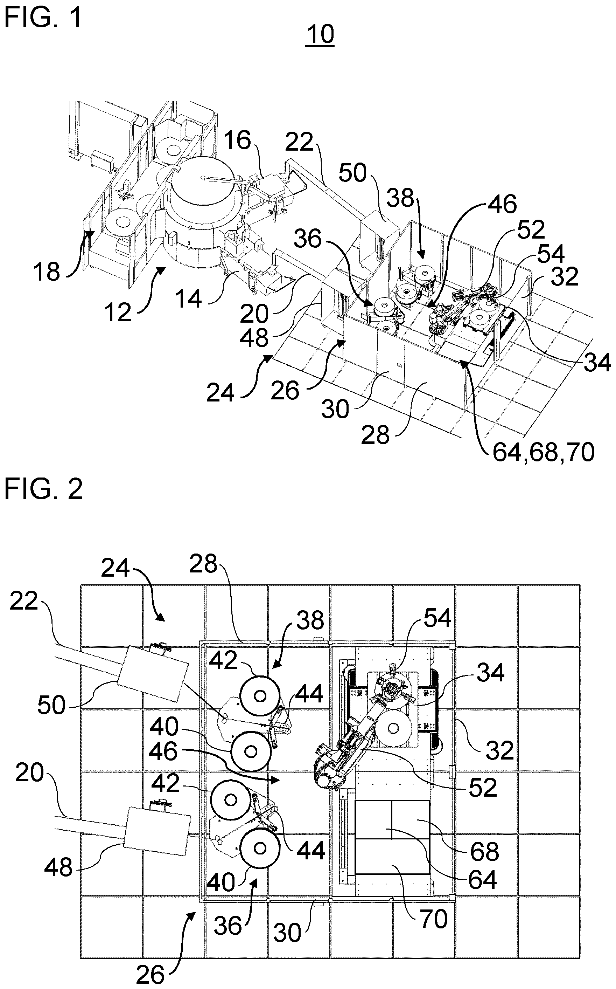

Die Figur 1 zeigt eine Vorrichtung 10 zum Etikettieren von Behältern. Die Vorrichtung 10 weist eine Etikettiereinrichtung 12 und eine Versorgungseinrichtung 24 auf. Die Vorrichtung 10 kann in einer Behälterbehandlungsanlage umfasst sein.

Die Etikettiereinrichtung 12 kann Behälter etikettieren. Beispielsweise kann die Etikettiereinrichtung 12 mindestens ein Etikettieraggregat 14, 16 aufweisen. Das mindestens eine Etikettieraggregat 14, 16 kann zur Applikation von Etiketten aus einem Etikettenband auf die Behälter ausgebildet sein.

Das mindestens eine Etikettieraggregat 14, 16 kann austauschbar an einer Peripherie der Etikettiereinrichtung 12 an- und abkoppelbar sein, z. B. über einen, vorzugsweise werkzeuglosen, Schnellkoppelmechanismus. Vorzugsweise sind mehrere Etikettieraggregate 14, 16 umfasst, die voneinander beabstandet an der Peripherie positioniert sind. Bevorzugt kann das mindestens eine Etikettieraggregat 14, 16 Rollen zum Bewegen über einen Untergrund der Anlage im von der Etikettiereinrichtung 12 abgekoppelten Zustand aufweisen.

Vorzugsweise kann die Etikettiereinrichtung 12 eine Rundläufer-Etikettiereinrichtung sein. Ein Antrieb der Etikettiereinrichtung 12 kann ein drehbares Karussell der Etikettiereinrichtung 12 drehen. Behälter können beabstandet voneinander an einem Umfang des Karussells in Behandlungsstationen gehalten und etikettiert werden. Alternativ kann die Etikettiereinrichtung 12 bspw. als eine Linear-Etikettiereinrichtung ausgeführt sein, z. B. mit nur einer Behandlungsstation oder mit mehreren in Reihe nebeneinander und/oder hintereinander angeordneten Behandlungsstationen.

Bevorzugt kann die Etikettiereinrichtung 12 mit mindestens einer weiteren Behälterhandlungsvorrichtung mittels eines Behälterförderersystems 18 verbunden sein. Das Behälterförderersystem 18 kann bspw. mindestens einen Transportstern und/oder mindestens einen Linearförderer aufweisen.

Bevorzugt kann die Etikettiereinrichtung 12 mit der Versorgungseinrichtung 24 über mindestens eine (Etiketten-) Bandführungsbrücke 20, 22 verbunden sein. Über die mindestens eine Bandführungsbrücke 20, 22 kann ein (abgerolltes) Etikettenband von der Versorgungseinrichtung 24 zu der Etikettiereinrichtung 12 zugeführt werden.

Im Einzelnen kann das mindestens eine Etikettieraggregat 14, 16 über die mindestens eine Bandführungsbrücke 20, 22 mit der Versorgungseinrichtung 24 verbunden sein. Über die mindestens eine Bandführungsbrücke 20, 22 kann mindestens ein Etikettenband von der Versorgungseinrichtung 24 zu dem mindestens einen Etikettieraggregat geführt werden. Beispielsweise kann ein erstes Etikettieraggregat 14 über eine erste Bandführungsbrücke 20 mit der Versorgungseinrichtung 24 verbunden sein. Ein zweites Etikettieraggregat 16 kann über eine zweite Bandführungsbrücke 22 mit der Versorgungseinrichtung 24 verbunden sein.

Bevorzugt kann sich die mindestens eine Bandführungsbrücke 20, 22 auf einer Höhe erstrecken, die höher ist als das mindestens eine Etikettieraggregat 14, 16. Die mindestens eine Bandführungsbrücke 20, 22 kann beim Abkoppeln und Ankoppeln des mindestens einen Etikettieraggregats 14, 16 von dem jeweilige Etikettieraggregat 14, 16 unterfahren werden. Es ist auch möglich, dass bspw. ein Benutzer die mindestens eine Bandführungsbrücke 20, 22 unterlaufen oder ein fahrerloses Transportfahrzeug (AGV) die mindestens eine Bandführungsbrücke 20, 22 unterfahren kann. Beispielsweise kann sich die mindestens eine Bandführungsbrücke 20, 22 auf einer Höhe ≥ 1.50 m, ≥ 2.0 m oder ≥ 2.5 m erstrecken.

Vorzugsweise erstreckt sich die mindestens eine Bandführungsbrücke 20, 22 im Wesentlichen geradlinig zwischen dem jeweiligen Etikettieraggregat 14, 16 und der Versorgungeinrichtung 24.

Die Bandführungsbrücke 20, 22 kann bspw. tunnelförmig oder kanalförmig sein. Bevorzugt kann die Bandführungsbrücke 20, 22 eine Gleitfläche zum gleitenden Abstützen eines Etikettenbands und/oder seitliche Führungselemente zum seitlichen Führen des Etikettenbands aufweisen.

Die Bandführungsbrücke 20, 22 kann einen Abstand zwischen dem mindestens einem Etikettieraggregat 14, 16 und der Versorgungseinrichtung 24 zumindest teilweise überbrücken. Beispielsweise kann die Bandführungsbrücke 20, 22 eine Länge in einem Bereich zwischen 1 m und 10 m aufweisen.

Die Figuren 1 und 2 zeigen die Versorgungseinrichtung 24. Die Versorgungseinrichtung 24 versorgt die Etikettiereinrichtung 12 mit mindestens einem Etikettenband zum Etikettieren von Behältern.

Es ist möglich, dass die Versorgungseinrichtung 24 mindestens eine weitere Etikettiereinrichtung mit mindestens einem weiteren Etikettenband zum Etikettieren von Behältern versorgt.

Die Versorgungseinrichtung 24 weist eine Roboterzelle 26 mit einer Rollenablage 34, mindestens einer Rollenaufnahmevorrichtung 36, 38 und einem Roboter 52 auf. Optional kann die Roboterzelle 26 bspw. noch eine Schutzeinhausung 28, mindestens einen Etikettenbandpuffer 48, 50, einen Personenbewegungsbereich 46, eine Werkzeugwechselstation 64, eine Prüfvorrichtung 68 und/oder einen Etikettenrollenpuffer 70 aufweisen.

Die Roboterzelle 26 ist beabstandet zu dem mindestens einen Etikettieraggregat 14,16 angeordnet. Bevorzugt kann zwischen der Roboterzelle 26 und dem mindestens einen Etikettieraggregat 14, 16 genügend Raum für den Aufenthalt mindestens einer Person und/oder zum Ermöglichen des An- und Abkoppelns des mindestens Etikettieraggregats 14, 16 vorhanden sein. Beispielsweise kann ein Minimalabstand zwischen der Roboterzelle 26 und dem mindestens einen Etikettieraggregat 14,16 ≥ 1 m, ≥ 1.5 m, ≥ 2 m, ≥ 3 m, ≥ 4 m oder ≥ 5 m sein.

Die (physische) Schutzeinhausung 28 der Roboterzelle 26 kann die Rollenablage 34, die mindestens eine Rollenaufnahmevorrichtung 36, 38 und den Roboter 52 und sowie optional den Personenbewegungsbereich 46, die Werkzeugwechselstation 64, die Prüfvorrichtung 68 und/oder den Etikettenrollenpuffer 70 einhausen. Vorzugsweise haust die Schutzeinhausung 28 die Rollenablage 34, die mindestens eine Rollenaufnahmevorrichtung 36, 38 und den Roboter 52 sowie optional den Personenbewegungsbereich 46, die Werkzeugwechselstation 64, die Prüfvorrichtung 68 und/oder den Etikettenrollenpuffer 70 vollumfänglich ein. Die Roboterzelle 26 und/oder die Schutzeinhausung 28 kann bspw. rechteckförmig/kastenförmig sein.

Die Schutzeinhausung 28 kann bspw. einen Schutzzaun oder eine Schutzwand aufweisen.

Bevorzugt kann die Schutzeinhausung 28 mindestens eine Tür 30 zum Betreten der Roboterzelle 26 bzw. der Schutzeinhausung 28 aufweisen. Die Tür 30 kann bspw. in der Schutzeinhausung 28 integriert sein.

Bevorzugt kann die Roboterzelle 26 ein System 32 zum Erzeugen mindestens eines Signalvorhangs aufweisen. Der Signalvorhang kann bspw. ein Lichtvorhang oder ein Laservorhang sein. Ein Signalvorhang kann bspw. so angeordnet bzw. erzeugt werden, dass die Rollenablage 34 von außerhalb der Roboterzelle 26 zugänglich ist. Bevorzugt kann der Signalvorhang direkt neben (vor) der Rollenablage 34 erzeugt werden.

Bevorzugt kann das System 32 mindestens einen weiteren Signalvorhang erzeugen, der so angeordnet ist, dass die Werkzeugwechselstation 64, die Prüfvorrichtung 68 und/oder der Etikettenrollenpuffer 70 von außerhalb der Roboterzelle 26 zugänglich ist. Bevorzugt kann der Signalvorhang direkt neben (vor) der Werkzeugwechselstation 64, der Prüfvorrichtung 68 und/oder dem Etikettenrollenpuffer 70 erzeugt werden.

Ein Eindringen in die Roboterzelle 26 durch einen Benutzer kann von einer Erfassungsvorrichtung erfasst werden. Beispielsweise kann das System 32 ein Teil der Erfassungsvorrichtung sein. Alternativ oder zusätzlich kann die Erfassungsvorrichtung bspw. einen Schließzustand der Tür 30 überwachen. Alternativ oder zusätzlich kann die Erfassungsvorrichtung bspw. eine, vorzugsweise kameragestützte, Innenraumüberwachung der Roboterzelle 26 ausführen.

Wenn die Erfassungsvorrichtung ein Eindringen in die Roboterzelle 26 erfasst, kann die Erfassungsvorrichtung bevorzugt nur den Roboter 52 stoppen und andere Vorrichtungen der Roboterzelle 26 weiterlaufen lassen, z. B. die mindestens eine Rollenaufnahmevorrichtung 36, 38 und optional deren Verbinder 44. Es ist auch möglich, dass die Erfassungsvorrichtung einen Betriebsmodus des Roboters 52 von einem Autonomiebetriebsmodus, in dem der Roboter 52 vollautonom und mit hoher Geschwindigkeit die mindestens eine Rollenaufnahmevorrichtung 36, 38 belädt usw., zu einem Kooperationsbetriebsmodus, in dem der Roboter 52 als Cobot betrieben wird, zu wechseln.

Die Rollenablage 34 kann innerhalb von der optionalen Schutzeinhausung 28 angeordnet sein. Beispielsweise kann die Rollenablage 34 als ein Arbeitstisch, auf dem Etikettenrollen abgelegt werden können, oder ein Förderer, auf dem Etikettenrollen abgelegt sind, ausgeführt sein. Es ist allerdings bspw. auch möglich, dass die Rollenablage 34 lediglich ein Palettenstellplatz zum Abstellen einer mit Etikettenrollen beladenen Palette oder ein sonstiger Lagerplatz für mindestens eine Etikettenrolle ist.

Die Rollenablage 34 kann bspw. manuell von einem Benutzer, zum Beispiel mittels eines Hubwagens oder Gabelstaplers, mit Etikettenrollen nachgefüllt werden. Alternativ oder zusätzlich kann das Nachfüllen der Etikettenrollen an der Rollenablage bspw. automatisiert mittels eines fahrerlosen Transportfahrzeugs (AGV) erfolgen. Bevorzugt kann die Rollenablage von dem Benutzer, dem Hubwagen, dem Gabelstapler und/oder dem fahrerlosen Transportfahrzeug durch einen Signalvorhang des Systems 32 hindurch erreicht werden.

Die Rollenablage 34 kann innerhalb eines Bewegungsbereichs des Roboters 52 angeordnet sein. Der Roboter 52 kann eine auf der Rollenablage 34 positionierte Etikettenrolle aufnehmen.

Die mindestens eine Rollenaufnahmevorrichtung 36, 38 kann innerhalb von der optionalen Schutzeinhausung 28 angeordnet sein. Die mindestens eine Rollenaufnahmevorrichtung 36, 38 ist zum Aufnehmen mindestens einer Etikettenrolle und zum Abrollen der mindestens einen aufgenommenen Etikettenrolle zu einem Etikettenband zum Zuführen zu der Etikettiereinrichtung 12 ausgebildet.

Bevorzugt können mehrere, z. B. zwei, Rollenaufnahmevorrichtungen 36, 38 umfasst sein. Beispielsweise kann eine Rollenaufnahmevorrichtung 36 mit dem Etikettieraggregat 14 zum Zuführen eines Etikettenbands zu dem Etikettieraggregat 14 verbunden sein, z. B. über die Bandführungsbrücke 20. Eine weitere Rollenaufnahmevorrichtung 38 kann mit dem weiteren Etikettieraggregat 16 zum Zuführen eines Etikettenbands zu dem weiteren Etikettieraggregat 16 verbunden sein, z. B. über die weitere Bandführungsbrücke 22.

Vorzugsweise können die Rollenaufnahmevorrichtungen 36, 38 jeweils hin zu dem Roboter 52 ausgerichtet sein. Besonders bevorzugt können die Rollenaufnahmevorrichtungen 36, 38 jeweils radial bezüglich einer Basis des Roboters 52 ausgerichtet sein (in Figur 2 nur beispielhaft für die Rollenaufnahmevorrichtung 36 dargestellt). Alternativ oder zusätzlich ist es beispielsweise möglich, dass die Rollenaufnahmevorrichtungen 36, 38 jeweils äquidistant zu dem Roboter 52 angeordnet sind.

Vorzugsweise weist eine Rollenaufnahmevorrichtung 36, 38 jeweils eine erste Rollenaufnahme 40 und eine zweite Rollenaufnahme 42 sowie optional einen Verbinder 44 auf.

Die Rollenaufnahmen 40, 42 können jeweils eine Etikettenrolle aufnehmen, z. B. übergeben von dem Roboter 52.

Die Rollenaufnahmen 40, 42 sind bevorzugt horizontal ausgerichtet. Alternativ können die Rollenaufnahmen 40, 42 bspw. vertikal ausgerichtet sein.

Vorzugsweise können die Rollenaufnahmen 40, 42 als sogenannte Rollenteller ausgeführt sein. Alternativ können die Rollenaufnahmen 40, 42 bspw. als Schubfächer ausgeführt sein.

Der Verbinder 44 kann dazu ausgebildet sein, ein Bandende einer Etikettenrolle auf der Rollenaufnahme 40 mit einem Bandanfang einer weiteren Etikettenrolle auf der Rollenaufnahme 42 zu verbinden (und umgekehrt).

Der Verbinder 44 kann bspw. als ein Klebeverbinder ausgeführt sein. Der Klebeverbinder kann den Bandanfang und das Bandende miteinander verkleben kann, z. B. mittels Aufbringen von Sprühkleber oder mittels Klebestreifen (Klebeband). Bevorzugt handelt es sich bei dem Klebestreifen um einen doppelseitigen Klebestreifen. Der Klebestreifen kann bspw. von dem Verbinder 44 selbst aufgebracht werden und bspw. schon am Bandende oder am Bandanfang aufgebracht sein, z. B. von dem Roboter 52.

Alternativ kann der Verbinder 44 bspw. als Schweißverbinder ausgeführt sein. Der Schweißverbinder kann den Bandanfang und das Bandende thermisch oder mittels Ultraschall miteinander verschweißen.

Bevorzugt können die Rollenaufnahmen 40, 42 nicht nur vom Roboter 52 mit jeweils einer Etikettenrolle beladen werden, sondern auch manuell von einem Benutzer. Der Benutzer kann sich hierfür bspw. in einem extra hierfür vorgesehenen Personenbewegungsbereich 46 in der Roboterzelle 26 aufhalten und bewegen. Es ist auch möglich, dass der Benutzer aus dem Personenbewegungsbereich 46 heraus bspw. den Verbinder 44 bedient.

Der Personenbewegungsbereich 46 kann bevorzugt zwischen der Rollenablage 34 und der mindestens einen Rollenaufnahmevorrichtung 36, 38 angeordnet sein. Bevorzugt ist der Roboter 52 gestoppt (z. B. von der Erfassungseinrichtung), wenn eine Person sich in dem Personenbewegungsbereich 46 aufhält. Alternativ kann der Roboter 52 bspw. so betrieben werden, dass er nicht in den Personenbewegungsbereich 46 eingreift, wenn eine Person sich in dem Personenbewegungsbereich 46 aufhält, oder dass er mit einer Person in dem Personenbewegungsbereich 46 in einem Kollaborationsbetriebsmodus zusammenarbeitet.

Der mindestens eine Etikettenbandpuffer 48, 50 ist dazu ausgebildet, jeweils ein Etikettenband von mindestens einer der Rollenaufnahmevorrichtungen 36, 38 zu empfangen und einzupuffern sowie das eingepufferte Etikettenband wieder auszupuffern. Das ausgepufferte Etikettenband kann zu der Etikettiereinrichtung 12 zugeführt werden.

Beispielsweise kann ein Etikettenbandpuffer 48 ein von der Rollenaufnahmevorrichtungen 36 abgerolltes Etikettenband empfangen, dieses einpuffern und auspuffern sowie zu dem Etikettieraggregat 14 zuführen, vorzugsweise über die Bandführungsbrücke 20. Ein weiterer Etikettenbandpuffer 50 kann ein von der weiteren Rollenaufnahmevorrichtungen 36 abgerolltes Etikettenband empfangen, dieses einpuffern und auspuffern sowie zu dem weiteren Etikettieraggregat 16 zuführen, vorzugsweise über die weitere Bandführungsbrücke 22.

Es ist möglich, dass der mindestens eine Etikettenbandpuffer 48, 50 innerhalb oder außerhalb von der optionalen Schutzeinhausung 28 angeordnet ist. Entsprechend kann der mindestens eine Etikettenbandpuffer 48, 50 ein Teil der Roboterzelle 26 sein oder nicht.

Der Roboter 52 kann innerhalb von der optionalen Schutzeinhausung 28 angeordnet sein. Der Roboter 52 ist dazu ausgebildet, die mindestens eine Rollenaufnahmevorrichtung 36, 38 automatisch mit Etikettenrollen von der Rollenablage 34zu beladen. Der Roboter 52 kann die mindestens eine Rollenaufnahmevorrichtung 36, 38 bspw. direkt von der Rollenablage 34 aus beladen. Alternativ kann der Roboter 52 eine Etikettenrolle bspw. erst nach einer Prüfung und/oder Wendung und/oder Zwischenlagerung in die mindestens eine Rollenaufnahmevorrichtung 36, 38 laden.

Bevorzugt ist der Roboter 52 ein Mehrachsroboter, besonders bevorzugt ein Knickarmroboter. Der Knickarmroboter kann bspw. ein 5-Achs-, 6-Achs- oder 7-Achs-Knickarmroboter sein. Andere Robotertypen sind ebenfalls denkbar.

Der Roboter 52 kann ein Industrieroboter ohne Kollaborationsfunktionalität sein. Alternativ kann der Roboter 52 bspw. ein kollaborativer Industrieroboter (Cobot) sein, der mit einem Benutzer kollaborieren kann. Bspw. hebt und bewegt der Roboter 52 die Etikettenbänder zu der mindestens einen Rollenaufnahmevorrichtung 36, 38 und ein Benutzer bedient den Verbinder 44.

Bevorzugt kann ein Robotersockel (eine Roboterbasis) des Roboters 52 so in der Roboterzelle 26 angebracht sein, dass er leicht getauscht oder mittels Adapterplatten angepasst werden kann. Vorzugsweise können somit unterschiedliche Robotertypen oder auch Hersteller verwendet werden. Bevorzugt kann ein Austausch des Roboters 52 mit einfachen Handhabungseinrichtungen, wie z. B. Hubwagen, möglich sein. Beispielsweise kann ein (kostengünstiger) Roboter 52 mit geringer Traglast verwendet werden, wenn nur vergleichsweise leichte Etikettenrollen zu bewegen sind. Sollte ein Upgrade auf einen Roboter 52 mit höherer Traglast gewünscht sein, so kann aufgrund der Ausführung des Robotersockels eine einfache Umrüstung möglich sein. Bevorzugt ist dann eine Robotersteuerung (Schaltschrank) so ausgeführt, dass sie nicht mit ausgetauscht werden muss.

Vorzugsweise ist der Roboter 52 stationär in der Roboterzelle 26 angeordnet. Beispielsweise kann der Roboter 52 an einer zentralen Position bzw. in einem Zentralbereich innerhalb der Roboterzelle 26 angeordnet sein, wie in den Figuren 1 und 2 dargestellt ist.

Es ist allerdings auch möglich, dass der Roboter 52 innerhalb der Roboterzelle 26 verfahrbar ist, vorzugsweise entlang einer Linearachse und/oder schienengeführt. Beispielsweise kann eine Schiene diagonal durch die Roboterzelle 26 oder mittig zwischen zwei einander gegenüberliegenden Seiten der Roboterzelle 26 verlaufen.

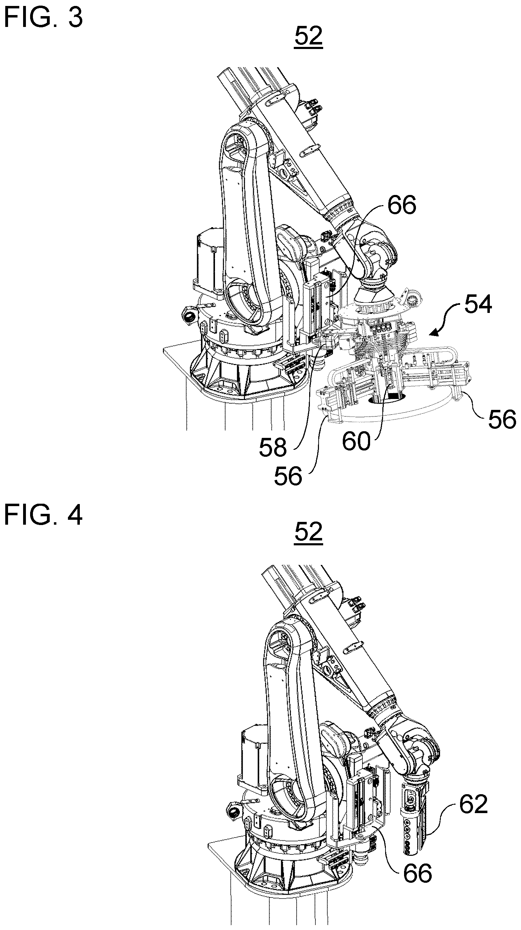

Der Roboter 52 kann ein Rollen-Handhabungswerkzeug 54 zum Handhaben einer Etikettenrolle aufweisen (siehe auch Figur 3). Das Handhabungswerkzeug 54 kann eine Etikettenrolle aufnehmen und ablegen. Das Handhabungswerkzeug 54 kann bevorzugt pneumatisch angetrieben sein.

Das Handhabungswerkzeug 54 kann konstruktiv an die Rollenaufnahmen 40, 42 angepasst sein, sodass das Handhabungswerkzeug 54 eine Etikettenrolle an eine jeweilige Rollenaufnahme 40, 42 wie gewünscht übergeben kann. Beispielsweise kann das Handhabungswerkzeug 54 an eine jeweilige Spannwelle der Rollenaufnahmen 40, 42 angepasst sein.

Vorzugsweise ist das Handhabungswerkzeug 54 als Rollengreifer ausgebildet. Bevorzugt ist der Rollengreifer als Innengreifer, z. B. Zentrischgreifer, zum Greifen der jeweiligen Etikettenrolle von innen am Rollenkern ausgeführt. Ergänzend kann der Rollengreifer optional einen Klemmvorrichtung 56 aufweisen. Die Klemmvorrichtung 56 kann die innengegriffene Etikettenrolle von außen durch leichtes Klemmen sichern. Vorzugsweise kann die Klemmeinrichtung bei Etikettenrollen verwendet werden, die zum Teleskopieren neigen und/oder um lose Bandanfänge zu sichern.

Es ist möglich, dass das Handhabungswerkzeug 54 oder der Roboter 52 mindestens einen Sensor aufweist. Beispielsweise kann eine Kamera 58 zum Erfassen einer Position einer jeweils zu greifenden Etikettenrolle, z. B auf der Rollenablage 34, umfasst sein. Alternativ oder zusätzlich kann bspw. mindestens ein Abstandssensor 60 zum Erfassen eines Abstands und/oder einer Orientierung einer zu greifenden oder bereits gegriffenen Etikettenrolle umfasst sein.

Bevorzugt kann die Sensorik des Roboters 52 auch bei einer Inbetriebnahme der Versorgungseinrichtung 24 verwendet werden, z. B. um eine Position einer oder mehrerer Komponenten (z. B. Rollenablage 34; Rollenaufnahmevorrichtung 36, 38; Rollenaufnahmen 40, 42 und/oder Verbinder 44 usw.) zu ermitteln. Vorteilhaft kann damit eine aufwändige Justierung und Einmessung bei der Inbetriebnahme entfallen.

Bevorzugt kann der Roboter 52 dazu ausgebildet, eine Etikettenrollen mittels des Handhabungswerkzeugs 54 zu wenden. Vorzugsweise kann Etikettenrolle somit bei Bedarf so gewendet werden, dass eine Wickelrichtung der Etikettenrolle einer gewünschten Wickelrichtung für die mindestens eine Rollenaufnahmevorrichtung 36, 38 entspricht.

Bevorzugt kann der Roboter 52 automatisch das Rollen-Handhabungswerkzeug 54 (siehe Figur 3) durch ein Bandanfang-Handhabungswerkzeug 62 (siehe Figur 4) austauschen und umgekehrt. Der Roboter 52 kann ein automatisches Werkzeugwechselsystem, vorzugsweise Greiferwechselsystem, zum Wechseln zwischen dem Rollen-Handhabungswerkzeug 54 und dem Bandanfang-Handhabungswerkzeug 62 aufweisen. Ebenfalls könnte ein Wechsel zwischen verschiedenen Größen und/oder Ausführungsarten desselben Greifertyps möglich sein, z. B. zur leichten Nachrüstung.

Vorzugsweise kann der Roboter 52 die Handhabungswerkzeuge 54 und 62 an einer Werkzeugwechselstation 64 wechseln (siehe Figuren 1 und 2). Die Werkzeugwechselstation 64 kann innerhalb der optionalen Schutzeinhausung 28 angeordnet sein. Das gerade nicht vom Roboter 52 genutzte Handhabungswerkzeug 54 oder 62 kann von dem Roboter 52 an der Werkzeugwechselstation 64 abgelegt werden. Später kann dieses abgelegte Handhabungswerkzeug 54 oder 62 wieder von dem Roboter 52 von der Werkzeugwechselstation 64 aufgenommen werden, im Austausch zu dem jeweils anderen Handhabungswerkzeug 54 oder 62.

Es ist allerdings prinzipiell auch möglich, dass der Roboter 52 beide Handhabungswerkzeuge 54, 62 gleichzeitig tragen kann, z. B. als Kombigreifer (nicht in den Figuren dargestellt).

Das beispielhaft in Figur 4 dargestellte Bandanfang-Handhabungswerkzeug 62 ist zum Handhaben eines Bandanfangs einer Etikettenrolle ausgebildet. Mit dem Handhabungswerkzeug 62 kann ein Bandanfang einer Etikettenrolle, die einer Rollenaufnahmevorrichtung 36, 38 aufgenommen ist, zu dem Verbinder 44 geführt werden.

Optional kann das Handhabungswerkzeug 62 einen Bandanfang einer Etikettenrolle schneiden, wenn bspw. der Verbinder 44 eine solche Funktionalität nicht aufweist.

Optional kann das Handhabungswerkzeug 62 einen Klebstoff oder ein Klebeband auf einen Bandanfang einer Etikettenrolle aufbringen, wenn bspw. der Verbinder 44 keine solche Funktionalität aufweist und auch der Roboter 52 keinen Klebebandspender aufweist.

Optional kann das Handhabungswerkzeug 62 Schnittmarken am Etikettenband erkennen, wenn bspw. der Verbinder 44 keinen Klebebandspender mit einer solchen Funktionalität aufweist.

Das Handhabungswerkzeug 62 ist vorzugsweise als ein Bandgreifer ausgeführt. Beispielsweise kann das Handhabungswerkzeug 62 ein Balgsauggreifer oder eine Klemmvorrichtung zum sicheren Aufnehmen des Bandanfangs aufweisen.

Es ist möglich, dass das Handhabungswerkzeug 62 eine Einrichtung aufweist, um die von der Etikettenrolle abgewickelte äußere Bandschicht aufnehmen und entsorgen zu können.

Bevorzugt kann der Roboter 52 einen Klebebandspender 66 aufweisen (siehe Figuren 3 und 4). Der Klebebandspender 66 kann dazu ausgebildet sein, ein, vorzugsweise doppelseitiges, Klebeband zum Verbinden von Etikettenbändern zu spenden.

Beispielsweise kann ein Bandanfang einer Etikettenrolle, die in einer Rollenaufnahmevorrichtung 36, 38 aufgenommen ist, von dem Handhabungswerkzeug 62 zu dem Klebebandspender 66 zum Applizieren des Klebebands auf den Bandanfang geführt werden. Die positionsgenaue Aufbringung des Klebebands kann bspw. durch Ausrichten des Bandanfangs anhand von mittels Schnittmarkensensoren des Klebebandspenders 66 erfassten Schnittmarken des Etikettenbands erfolgen.

Der so behandelte Bandanfang kann dann von dem Handhabungswerkzeug 62 zu dem Verbinder 44 geführt werden, der den Bandanfang mit einem Bandende einer anderen, aufgebrauchten oder angebrochenen Etikettenrolle verbindet.

Bevorzugt kann der Klebebandspender 66 der einzige Klebebandspender der Versorgungseinrichtung 24 sein. Das Klebeband vom Klebebandspender 66 kann somit für alle Verbinder 44 bzw. Rollenaufnahmevorrichtungen 36, 38 verwendet werden. Alternativ kann bspw. ein Klebebandspender je Verbinder 44 umfasst sein.

Unter erneuter Bezugnahme auf die Figuren 1 und 2 ist dargestellt, dass die Prüfvorrichtung 68 bspw. eine stationäre Prüfvorrichtung sein kann. Alternativ kann die Prüfvorrichtung 68 bspw. am Roboter 52 getragen sein.

Die Prüfvorrichtung 68 kann dazu ausgebildet sein, eine Etikettenrolle in Bezug auf eine Wickelrichtung, eine Position eines Bandanfangs, einen Zustand eines Bandanfangs (Vorabprüfung, ob der Bandanfang erfolgreich aufgenommen werden kann (somit kann eine zeitkritische Störung später beim Rollenwechsel vermieden werden)), eine Sorte, einen Durchmesser, eine Abweichung von einem vorgegebenen Rollenparameter (z. B. Überstand Etiketten über Kern, Maße, Gewicht usw.) und/oder eine Beschädigung zu prüfen.

Die Prüfvorrichtung 68 kann jegliche geeignete Sensorik zum Prüfen aufweisen. Beispielsweise kann die Prüfvorrichtung 68 eine Kamera, einen kapazitiven Sensor und/oder einen Ultraschallsensor aufweisen.

Geprüfte Etikettenrollen können dann bspw. von dem Roboter 52 auf einem Etikettenrollenpuffer 70 abgelegt werden. Vom Etikettenrollenpuffer 70 aus kann der Roboter 52 die mindestens eine Rollenaufnahmevorrichtung 36, 38 mit geprüften Etikettenrollen beladen.

Die Etikettenrollenpuffer 70 kann innerhalb der optionalen Schutzeinhausung 28 angeordnet sein. Beispielsweise kann der Etikettenrollenpuffer 70 als ein Arbeitstisch ausgebildet sein, auf dem die geprüften Etikettenrollen abgelegt werden können. Es ist allerdings bspw. auch möglich, dass der Etikettenrollenpuffer 70 lediglich ein Palettenstellplatz zum Abstellen einer mit Etikettenrollen beladenen Palette oder ein sonstiger Lagerplatz für mindestens eine Etikettenrolle ist.

Besonders bevorzugt kann die Versorgungseinrichtung 24 modular aufgebaut sein.

Beispielsweise kann die Bandführungsbrücke 20 und/oder 22 aus mehreren Brückensegmentmodulen aufgebaut sein. Die Schutzeinhausung 28 kann aus mehreren Wandmodulen aufgebaut sein. Die Rollenablage 34 kann bspw. als ein Palettenstellplatz-Modul für einen Hubwagen und/oder als ein Palettenstellplatz-Modul für ein fahrerloses Transportfahrzeug ausgeführt sein. Die mindestens eine Rollenaufnahmevorrichtung 36, 38 kann jeweils ein Modul sein. Der mindestens eine Etikettenbandpuffer 48, 50 kann jeweils ein Modul sein. Der Roboter 52 kann ein Modul sein. Die Werkzeugwechselstation 64, der Klebebandspender 66, die Prüfvorrichtung 68 und/oder der Etikettenrollenpuffer 70 kann jeweils ein Modul sein.

Bevorzugt kann jedes Modul seine eigene Steuereinrichtung aufweisen. Die Steuereinrichtungen der Module können entsprechend verteilt in der Roboterzelle 26 angeordnet sein.

Ein bevorzugtes Verfahren zum Versorgen der Etikettiereinrichtung 12 kann bspw. einen, mehrere oder alle der nachfolgenden Verfahrensschritte aufweisen.

Der Roboter 52 kann mit dem Rollen-Handhabungswerkzeug 54 eine Etikettenrolle von der Rollenablage 34 aufnehmen. Der Roboter 52 kann die Etikettenrolle zur Prüfvorrichtung 68 verfahren. Die Etikettenrolle kann von der Prüfvorrichtung 68 geprüft werden. Beispielsweise kann die Prüfvorrichtung einen Bandanfang der Etikettenrolle erfassen und/oder eine Wickelrichtung der Etikettenrolle erfassen. Bei Bedarf kann die Etikettenrolle von dem Roboter 52 mittels des Rollen-Handhabungswerkzeug 54 gewendet werden, wenn die erfasste Wickelrichtung nicht der gewünschten Wickelrichtung entspricht. Die geprüfte und ggf. gewendete Etikettenrolle kann von dem Roboter 52 mittels des Rollen-Handhabungswerkzeugs 54 mit einem vorzugsweise wie gewünscht ausgerichteten Bandanfang auf dem Etikettenrollenpuffer 70 abgelegt werden. Der Roboter 52 kann die vorherigen Schritte wiederholen, bis der Etikettenrollenpuffer 70 ausreichend gefüllt ist.

Bei Bedarf kann der Roboter 52 eine leere oder angebrochene Etikettenrolle von einer der Rollenaufnahmen 40, 42 entnehmen. Der Rollenkern kann entsorgt werden. Eine angebrochene Etikettenrolle kann auf einem gesonderten Platz abgelegt werden.

Der Roboter 52 kann mittels des Rollen-Handhabungswerkzeugs 54 eine neue Etikettenrolle z. B. von dem Etikettenrollenpuffer 70, auf eine der Rollenaufnahme 40, 42 legen, vorzugsweise mit einer gewünschten Ausrichtung des Bandanfangs.

Der Roboter 52 kann von dem Rollen-Handhabungswerkzeug 54 zu dem Bandanfang-Handhabungswerkzeug 62 wechseln, z. B. an der Werkzeugwechselstation 64. Mittels des Bandanfang-Handhabungswerkzeugs 62 kann der Bandanfang der Etikettenrolle aufgenommen werden. Bei Bedarf kann eine die äußerste Etikettenbandlage von der Etikettenrolle abgespult und vom Bandanfang-Handhabungswerkzeug 62 aufgenommen werden. Der aufgenommene Bandanfang kann vom Roboter 52 mittels des Bandanfang-Handhabungswerkzeugs 62 zu dem Klebebandspender 66 zugeführt werden. Am Klebebandspender 66 kann mittels einer Schnittmarkenerkennung am Etikettenband die korrekte Stelle für das Aufbringen des Klebestreifens ermittelt und dieser aufgebracht werden. Der Roboter 52 kann den so behandelten Bandanfang mittels des Bandanfang-Handhabungswerkzeugs 62 zu dem Verbinder 44 verfahren. Das Etikettenband kann vom Verbinder 44 oder dem Bandanfang-Handhabungswerkzeug 62 abgeschnitten und vom Bandanfang-Handhabungswerkzeug 62 zum Verbinder 44 übergeben werden. Der Roboter 52 kann das restliche noch am Bandanfang-Handhabungswerkzeug 62 befindliche Etikettenband entsorgen. Der Roboter 52 kann von dem Bandanfang-Handhabungswerkzeug 62 zurück zu dem Rollen-Handhabungswerkzeug 54 wechseln, z. B. an der Werkzeugwechselstation 64.

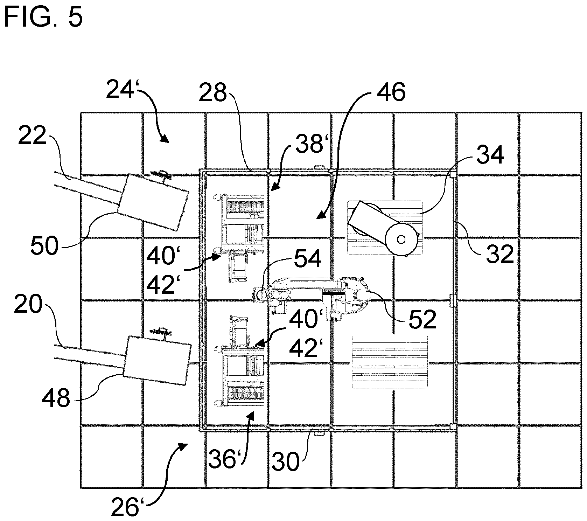

Die Figur 5 zeigt eine modifizierte Versorgungseinrichtung 24'.

Beispielsweise können die Rollenaufnahmen 40', 42' der Rollenaufnahmevorrichtungen 36', 38' vertikal ausgerichtet sein. Es können auch mehr als zwei Rollenaufnahmen 40', 42' je Rollenaufnahmevorrichtung 36', 38' umfasst sein. Bevorzugt sind die Rollenaufnahmen 40', 42' als Schubladen ausgeführt.

Beispielsweise kann jede Rollenaufnahmevorrichtung 36', 38' ihren eigenen Klebebandspender aufweisen. Der Roboter 52 kann eine der Rollenaufnahmen 40', 42' mit einer Etikettenrolle beladen. Der Roboter 52 oder eine andere Vorrichtung kann den Bandanfang dieser Etikettenrolle aufnehmen und in eine Haltevorrichtung an der Rollenaufnahmevorrichtung 36', 38' legen. Das Klebeband kann ohne Zutun des Roboters 52 mittels einer Vorrichtung an der jeweiligen Rollenaufnahmevorrichtung 36', 38' und dem Klebebandspender aufgebracht werden. Das Verkleben kann wiederum mittels eines Verbinders erfolgen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Etikettiereinrichtung, des Etikettieraggregats, der Versorgungseinrichtung, der Roboterzelle, der Rollenablage, der Rollenaufnahmevorrichtung und/oder des Roboters des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zum Etikettieren von Behältern
- 12: Etikettiereinrichtung
- 14: Etikettieraggregat
- 16: Etikettieraggregat
- 18: Behälterfördersystem
- 20: Bandführungsbrücke
- 22: Bandführungsbrücke
- 24: Versorgungseinrichtung
- 26: Roboterzelle
- 28: Schutzeinhausung
- 30: Tür
- 32: System zum Erzeugen eines Signalvorhangs
- 34: Rollenablage
- 36: Rollenaufnahmevorrichtung
- 38: Rollenaufnahmevorrichtung
- 40: Rollenaufnahme
- 42: Rollenaufnahme
- 44: Verbinder
- 46: Personenbewegungsbereich
- 48: Etikettenbandpuffer
- 50: Etikettenbandpuffer
- 52: Roboter
- 54: Rollen-Handhabungswerkzeug
- 56: Klemmvorrichtung
- 58: Kamera
- 60: Abstandssensor
- 62: Bandanfang-Handhabungswerkzeug
- 64: Werkzeugwechselstation
- 66: Klebebandspender
- 68: Prüfvorrichtung
- 70: Etikettenrollenpuffer

## Patentansprüche

1. Vorrichtung (10) zum Etikettieren von Behältern, aufweisend:
eine Etikettiereinrichtung (12), vorzugsweise Rundläufer-Etikettiereinrichtung, mit einem Etikettieraggregat (14) zum Etikettieren der Behälter; und
eine Versorgungseinrichtung (24), die mit dem Etikettieraggregat (14) zum Zuführen eines Etikettenbands zu dem Etikettieraggregat (14) verbunden ist,
wobei die Versorgungseinrichtung (24) eine Roboterzelle (26) aufweist, die beabstandet zu dem Etikettieraggregat (14) angeordnet ist und aufweist:
- eine Rollenablage (34) zum Ablegen von Etikettenrollen;
- eine Rollenaufnahmevorrichtung (36) zum Aufnehmen und Abrollen mindestens einer Etikettenrolle zu dem Etikettenband zum Zuführen zu dem Etikettieraggregat (14);
- einen Roboter (52), vorzugsweise Mehrachsroboter, besonders bevorzugt Knickarmroboter, wobei der Roboter (52) dazu konfiguriert ist, die Rollenaufnahmevorrichtung (36) automatisch mit Etikettenrollen von der Rollenablage (34) zu beladen.

2. Vorrichtung (10) nach Anspruch 1, wobei die Versorgungseinrichtung (24) ferner aufweist:
einen Etikettenbandpuffer (48), der mit der Rollenaufnahmevorrichtung (36) zum Empfangen des Etikettenbands von der Rollenaufnahmevorrichtung (36) und mit dem Etikettieraggregat (14) zum Zuführen des Etikettenbands zu dem Etikettieraggregat (14) verbunden ist,
wobei der Etikettenbandpuffer (48) dazu ausgebildet ist, das empfangene Etikettenband einzupuffern und das eingepufferte Etikettenband zum Zuführen zu dem Etikettieraggregat (14) auszupuffern.

3. Vorrichtung (10) nach Anspruch 1 oder Anspruch 2, ferner aufweisend:
eine Bandführungsbrücke (20), die die Versorgungseinrichtung (24) und das Etikettieraggregat (14) zum Führen des Etikettenbands zu dem Etikettieraggregat (14) verbindet.

4. Vorrichtung (10) nach einem der vorherigen Ansprüche, wobei:
die Roboterzelle (26) mindestens so weit von dem Etikettieraggregat (14) beabstandet ist, dass das Etikettieraggregat (14) von der Etikettiereinrichtung (12) abkoppelbar und wegbewegbar ist; und/oder
ein Minimalabstand zwischen der Roboterzelle (26) und dem Etikettieraggregat (14) ≥ 1 m, ≥ 1.5 m, ≥ 2 m, ≥ 3 m, ≥ 4 m oder ≥ 5 m ist; und/oder
zwischen der Roboterzelle (26) und dem Etikettieraggregat (14) ein Lauf- oder Fahrweg verläuft.

5. Vorrichtung (10) nach einem der vorherigen Ansprüche, wobei:
die Etikettiereinrichtung (12) ein weiteres Etikettieraggregat (14) zum Etikettieren der Behälter aufweist;
die Versorgungseinrichtung (24) mit dem weiteren Etikettieraggregat (16) zum Zuführen eines weiteren Etikettenbands zu dem weiteren Etikettieraggregat (14) verbunden ist;
die Roboterzelle (26) beabstandet zu dem weiteren Etikettieraggregat (14) angeordnet ist und ferner eine weitere Rollenaufnahmevorrichtung (38) zum Aufnehmen und Abrollen mindestens einer weiteren Etikettenrolle zu dem weiteren Etikettenband zum Zuführen zu dem weiteren Etikettieraggregat (16) aufweist; und
der Roboter (52) dazu konfiguriert ist, die weitere Rollenaufnahmevorrichtung (38) automatisch mit Etikettenrollen von der Rollenablage (34) zu beladen.

6. Vorrichtung (10) nach Anspruch 5, wobei mindestens eines erfüllt ist von:
die Versorgungseinrichtung (24) weist einen weiteren Etikettenbandpuffer (50) auf, der mit der weiteren Rollenaufnahmevorrichtung (38) zum Empfangen des weiteren Etikettenbands von der weiteren Rollenaufnahmevorrichtung (38) und mit dem weiteren Etikettieraggregat (16) zum Zuführen des weiteren Etikettenbands zu dem weiteren Etikettieraggregat (16) verbunden ist, wobei der weitere Etikettenbandpuffer (50) dazu ausgebildet ist, das empfange weitere Etikettenband einzupuffern und das eingepufferte weitere Etikettenband zum Zuführen zu dem weiteren Etikettieraggregat (16) auszupuffern;
die Vorrichtung (10) weist ferner eine weitere Bandführungsbrücke (22) auf, die die Versorgungseinrichtung (24) und das weitere Etikettieraggregat (14) zum Führen des weiteren Etikettenbands zu dem weiteren Etikettieraggregat (14) verbindet;
die Roboterzelle (26) ist mindestens so weit von dem weiteren Etikettieraggregat (16) beabstandet, dass das weitere Etikettieraggregat (16) von der Etikettiereinrichtung (12) abkoppelbar und wegbewegbar ist;
ein Minimalabstand zwischen der Roboterzelle (24) und dem weiteren Etikettieraggregat (16) ist ≥ 1 m, ≥ 1.5 m, ≥ 2 m, ≥ 3 m, ≥ 4 m oder ≥ 5 m; und
zwischen der Roboterzelle (26) und dem weiteren Etikettieraggregat (16) verläuft ein Lauf- oder Fahrweg.

7. Vorrichtung (10) nach Anspruch 5 oder Anspruch 6, wobei:
die Rollenaufnahmevorrichtung (36) und die weitere Rollenaufnahmevorrichtung (38) jeweils hin zu dem Roboter (52) ausgerichtet sind, vorzugsweise jeweils radial bezüglich einer Basis des Roboters (52), und/oder jeweils äquidistant zu dem Roboter (52) angeordnet sind.

8. Vorrichtung (10) nach einem der vorherigen Ansprüche, wobei:
die Rollenaufnahmevorrichtung (36) und/oder die weitere Rollenaufnahmevorrichtung (38) aufweist:
- zwei, vorzugsweise horizontal oder vertikal ausgerichtete, Rollenaufnahmen (40, 42), vorzugsweise Rollenteller; und
- einen Verbinder (44), der dazu ausgebildet ist, ein Bandende einer Etikettenrolle von einer der zwei Rollenaufnahmen mit einem Bandanfang einer Etikettenrolle von der anderen der zwei Rollenaufnahmen zu verbinden,
wobei vorzugsweise der Roboter (52) ferner zum Zuführen des Bandanfangs zu dem Verbinder (44) und/oder zum Applizieren eines Klebebands auf den Bandanfang konfiguriert ist.

9. Vorrichtung (10) nach einem der vorherigen Ansprüche, wobei die Roboterzelle (26) ferner aufweist:
eine Schutzeinhausung (28), die die Rollenablage (34), die Rollenaufnahmevorrichtung (36) und den Roboter (52) einhaust; und/oder
ein System (32) zum Erzeugen mindestens eines Signalvorhangs, vorzugsweise Lichtvorhangs oder Laservorhangs, zum Begrenzen der Roboterzelle (26), wobei vorzugsweise das System (32) zum Erzeugen eines Signalvorhangs vor der Rollenablage (34) zum Zugänglichmachen der Rollenablage (34) von außerhalb der Roboterzelle (26) ausgebildet ist.

10. Vorrichtung (10) nach einem der vorherigen Ansprüche, wobei die Roboterzelle (26) ferner aufweist:
eine Werkzeugwechselstation (64),
wobei:
der Roboter (52) dazu konfiguriert ist, an der Werkzeugwechselstation (64) einen automatischen Werkzeugwechsel durchzuführen, und optional:
der Roboter (52) dazu konfiguriert ist, an der Werkzeugwechselstation (64) einen automatischen Werkzeugwechsel zwischen unterschiedlichen Handhabungswerkzeugen, vorzugsweise aufweisend mindestens ein Rollen-Handhabungswerkzeug (54), bevorzugt Rollen-Innengreifer, zum Handhaben einer Etikettenrolle und/oder mindestens ein Bandanfang-Handhabungswerkzeug (62) zum Handhaben eines Bandanfangs einer Etikettenrolle, durchzuführen.

11. Vorrichtung (10) nach einem der vorherigen Ansprüche, wobei:
der Roboter (52) ein stationärer Roboter ist; oder
der Roboter (52) innerhalb der Roboterzelle (26) verfahrbar ist, vorzugsweise entlang einer Linearachse und/oder schienengeführt.

12. Vorrichtung (10) nach einem der vorherigen Ansprüche, wobei:
die Rollenaufnahmevorrichtung (36) manuell mit einer Etikettenrolle beladbar ist; und
die Roboterzelle (26) ferner einen Personenbewegungsbereich (46) aufweist, der zwischen der Rollenablage (34) und der Rollenaufnahmevorrichtung (36) angeordnet ist, für einen Bediener zum manuellen Beladen der Rollenaufnahmevorrichtung (36) mit einer Etikettenrolle.

13. Vorrichtung (10) nach einem der vorherigen Ansprüche, wobei die Roboterzelle (26) ferner aufweist:
eine Prüfvorrichtung (68), die dazu konfiguriert ist, Etikettenrollen zu prüfen, vorzugsweise in Bezug auf mindestens eines von:
- eine Wickelrichtung,
- eine Position und/oder einen Zustand eines Bandanfangs;
- eine Sorte,
- einen Durchmesser,
- eine Abweichung von einem vorgegebenen Rollenparameter, und
- eine Beschädigung; und optional
einen Etikettenrollenpuffer (70) zum Zwischenlagern von geprüften Etikettenrollen.

14. Vorrichtung (10) nach einem der vorherigen Ansprüche, wobei:
der Roboter (52) dazu konfiguriert ist, eine Etikettenrolle abhängig von einer zuvor mittels einer Prüfvorrichtung (68) erfassten Wickelrichtung der jeweiligen Etikettenrolle zu wenden; und/oder
der Roboter (52) einen Klebebandspender (66) zum Spenden eines, vorzugsweise doppelseitigen, Klebebands zum Verbinden von Etikettenbändern aufweist.

15. Vorrichtung (10) nach einem der vorherigen Ansprüche, wobei die Roboterzelle (26) ferner aufweist:
eine Erfassungsvorrichtung, die dazu konfiguriert ist, ein Eindringen eines Benutzers in die Roboterzelle (26) zu erfassen und wenn das Eindringen erfasst wird:
- den Roboter (52) zu stoppen oder einen Betrieb des Roboters (52) von einem Autonomiebetriebsmodus zu einem Kooperationsbetriebsmodus zu wechseln; und
- die Rollenaufnahmevorrichtung (36) weiterlaufen zu lassen.
